# EUROPÄISCHE PATENTANMELDUNG

(11) **EP 0 690 022 A1**
(43) Veröffentlichungstag der Anmeldung: **03.01.1996**
(21) Anmeldenummer: 95109406.9
(22) Anmeldetag: 17.06.1995
(51) Int. Cl.: C01B 17/04

(54) **Verfahren zur Reduktion von SO2 zu Schwefel**

(30) Priorität: 30.06.1994 DE 4422898
(71) Anmelder: METALLGESELLSCHAFT AG, D-60323 Frankfurt am Main (DE)
(72) Erfinder: Reimert, Rainer, Dr., D-65510 Idstein (DE); Vydra, Karel, Dr., D-61231 Bad Nauheim (DE); Werner, Dietrich, D-64409 Messel (DE)

(57) **Zusammenfassung**

Es wird ein Verfahren zur Reduktion von SO₂ zu Schwefel beschrieben, wobei
a) SO₂, Sauerstoff und/oder Luft und Wasserdampf in eine Wirbelschicht eingeleitet werden, die Wirbelschicht mit einem festen, kohlenstoffhaltigen Reduktionsmittel beschickt ist und die Wirbelschicht bei einer Temperatur von 700°C bis 950°C betrieben wird,
b) das aus der Wirbelschicht austretende Gas entstaubt wird,
c) das gemäß Verfahrensstufe (b) entstaubte Gas mit SO₂ und Wasserdampf gemischt wird,
d) das Gasgemisch gemäß Verfahrensstufe (c) entstaubt wird,
e) das gemäß Verfahrensstufe (d) entstaubte Gas in mindestens einen Reaktor zur katalytischen Reduktion bei einer Temperatur von 450°C bis 700°C eingeleitet wird,
f) bei dem aus der katalytischen Reduktion gemäß Verfahrensstufe (e) austretenden Gas ein Verhältnis von H₂S zu SO₂ von etwa 1,8 bis 2,2 zu 1 eingestellt wird und dieses Gas in eine Claus-Anlage eingeleitet wird.

## Beschreibung

Die vorliegende Erfindung betrifft ein Verfahren zur Reduktion von SO₂ zu Schwefel.

Bei der Röstung sulfidischer Erze müssen schwefelhaltige Bestandteile, insbesondere SO₂, aus dem Abgas entfernt und weiterverarbeitet werden. In den meisten Fällen wird abgetrenntes SO₂ zu Schwefelsäure umgesetzt. Die Schwefelsäureherstellung wird für die Metallhütten aber immer unwirtschaftlicher, da die so hergestellte Schwefelsäure für die häufigsten Anwendungen nicht die erforderliche Reinheit aufweist. Für viele Metallhütten ergibt sich daher ein Mißverhältnis zwischen Metallproduktion und Säurebedarf, da ein Überschuß an produzierter Schwefelsäure anfällt.

Es sind auch Verfahren zur Aufkonzentrierung von SO₂ und zur Umwandlung des angereicherten SO₂ zu Schwefel bekannt. Diese Verfahren benötigen als Reduktionsmittel CH₄, CO, H₂, H₂S oder Gemische aus diesen Gasen. Für Hüttenstandorte ist die Bereitstellung dieser Reduktionsgase oft schwierig und teuer.

Aus der JP-OS 79/54,790 ist ein Verfahren zur Gewinnung von Schwefel aus SO₂-haltigem Gas bekannt. Nach dem Verfahren wird SO₂-haltiges Gas in einen Reaktor bei einer Temperatur von 700°C bis 900°C eingeleitet. Der Reaktor enthält ein Wanderbett aus Kohle. In diesem Reaktor wird der größte Teil des SO₂ zu Schwefel reduziert. Das aus dem Reaktor austretende Gas wird in einen zweiten Reaktor eingeleitet, der ein Wanderbett als Katalysator enthält, das aus Al₂O₃-, SiO₂- oder TiO₂-Trägern besteht, die mit einem oder mehreren Oxiden der Metalle Ca, Mg, Fe und Cu sowie mit Eisenerz oder Kalkstein belegt sind. Der zweite Reaktor wird bei einer Temperatur von 250°C bis 700°C betrieben und dient dazu, das restliche SO₂ mit Kohle zu Schwefel zu reduzieren. Bei diesem Verfahren muß die in stöchiometrischen Mengen eingesetzte Kohle dosiert werden. Die Menge der Kohle muß dem Massenstrom des SO₂ immer angepaßt werden. Die Dosierung der Kohle ist schwer handhabbar. Die Kohle, die im Wanderbett verbraucht wird, wandelt sich in Asche um. Die gebildete Asche beeinträchtigt die Gasdurchlässigkeit des Wanderbettes, was die Handhabung dieses Verfahrens schwierig macht. Die Reaktionsgeschwindigkeit der Reduktionsreaktion ist beim stöchiometrischen Verhältnis der Komponenten niedrig. Der Katalysator in der zweiten Stufe muß ständig regeneriert werden.

Die Aufgabe der vorliegenden Erfindung besteht darin, ein einfaches, wirtschaftliches und umweltschonendes Verfahren für die Reduktion von SO₂ zu Schwefel mittels fester, kohlenstoffhaltiger Reduktionsmittel bereitzustellen.

Die Aufgabe der vorliegenden Erfindung wird dadurch gelöst, daß
a) SO₂, Sauerstoff und/oder Luft und Wasserdampf in eine Wirbelschicht eingeleitet werden, die Wirbelschicht mit einem festen, kohlenstoffhaltigen Reduktionsmittel beschickt ist und die Wirbelschicht bei einer Temperatur von 700°C bis 950°C betrieben wird,
b) das aus der Wirbelschicht austretende Gas entstaubt wird,
c) das gemäß Verfahrensstufe (b) entstaubte Gas mit SO₂ und Wasserdampf gemischt wird,
d) das Gasgemisch gemäß Verfahrensstufe (c) entstaubt wird,
e) das gemäß Verfahrensstufe (d) entstaubte Gas in mindestens einen Reaktor zur katalytischen Reduktion bei einer Temperatur von 450°C bis 700°C eingeleitet wird,
f) bei dem aus der katalytischen Reduktion gemäß Verfahrensstufe (e) austretenden Gas ein Verhältnis von H₂S zu SO₂ von etwa 1,8 bis 2,2 zu 1 eingestellt wird und dieses Gas in eine Claus-Anlage eingeleitet wird.

Der besondere Vorteil des Verfahrens der vorliegenden Erfindung liegt darin, daß in der ersten Reduktionsstufe gemäß Verfahrensstufe (a) neben einer Teilreduktion von SO₂ auch eine Erzeugung von reduzierenden Gasen für die zweite Reduktionsstufe gemäß Verfahrensstufe (e) erfolgt.

Als festes, kohlenstoffhaltiges Reduktionsmittel sind Kohle, Koks, Petrolkoks usw. vorgesehen. Das zu reduzierende SO₂ wird gemäß Verfahrensstufe (a) gemeinsam mit Wasserdampf, Sauerstoff und/oder Luft in eine Wirbelschicht eingeleitet, die mit dem kohlenstoffhaltigen Reduktionsmittel beladen ist. In der Verfahrensstufe (a) erfolgt die Umsetzung von SO₂ zu H₂S, COS, CS₂ und Schwefel. Die für die Reduktion notwendige Energie wird durch Verbrennen eines Teils des festen, kohlenstoffhaltigen Reduktionsmittels zu CO und CO₂ bei gleichzeitiger Zufuhr von sauerstoffhaltigen Gasen, nämlich Luft, mit Sauerstoff angereicherter Luft oder technischem Sauerstoff, erhalten. Die Asche wird gemeinsam mit einem Teil des nicht ausreagierten kohlenstoffhaltigen Reduktionsmittels aus dem Reaktor, nämlich der Wirbelschicht, abgezogen. In die Wirbelschicht wird als Fluidisierungsgas ein sauerstoffhaltiges Gas, nämlich Luft, mit Sauerstoff angereicherte Luft oder technischer Sauerstoff eingeleitet, wobei ein Sauerstoffgehalt der mit Sauerstoff angereicherten Luft von 50 bis 95 % bevorzugt ist. In der Verfahrensstufe (b) erfolgt eine grobe Entstaubung, vorzugsweise in einem Zyklon.

Vor dem Eintritt in die katalytische Reduktionsstufe wird dem Gas weiteres SO₂ sowie Wasserdampf zugemischt. Durch das Zumischen der Gase gemäß Verfahrensstufe (c) wird die Gastemperatur auf eine für die weitgehende Entstaubung des Gases und für die katalytische Reduktion erforderliche Temperatur abgekühlt.

In der Verfahrensstufe (d) erfolgt eine feine Entstaubung, vorzugsweise in einem Multizyklon oder Filter.

Die katalytische Reduktionsstufe gemäß Verfahrensstufe (e) besteht aus mindestens einem katalytischen Reaktor. In dem Reaktor erfolgt die Reduktion eines Teils des zugeführten SO₂ mit CO und H₂, die während der ersten Reduktion gemäß Verfahrensstufe (a) erzeugt wurden. Die Hydrolyse des CS₂ sowie des COS erfolgt durch den zugeführten Wasserdampf. Die Zugabe der erforderlichen Mengen an SO₂ und H₂O erfolgt so, daß das Verhältnis von H₂S zu SO₂ beim Austritt aus der katalytischen Reduktion gemäß Verfahrensstufe (e) von 1,8 bis 2,2 zu 1 beträgt.

Nach Abkühlung des aus der katalytischen Reduktion gemäß Verfahrensstufe (e) austretenden Gases und ggf.

Kondensation des gebildeten Schwefels wird das Gas zur weiteren Verarbeitung in eine in an sich bekannter Weise ausgestaltete Claus-Anlage geführt. Durch diese Bedingung und die Bedingung, daß die Austrittstemperatur gemäß Verfahrensstufe (a) immer über 700°C, vorzugsweise aber etwa 850 bis 900°C und die Austrittstemperatur bei der Stufe der katalytischen Reduktion gemäß Verfahrensstufe (e) maximal 900°C bis 950°C beträgt, werden erfindungsgemäß die Mengen der folgenden vier Gasströme bestimmt: Sauerstoff und Wasserdampf in die Reduktion gemäß Verfahrensstufe (a) und Wasserdampf in den ersten und ggf. zweiten Reaktor der katalytischen Reduktion gemäß Verfahrensstufe (e). Die Anteile an eingeleitetem SO₂ und H₂O (als Wasserdampf) in den Verfahrensstufen (a), (c) und (e) gehen aus der nachstehenden Tabelle hervor.

| Verfahrensstufe | SO₂ (%) | H₂O (%) |
|---|---|---|
| (a) | 30 - 50 | 5 - 20 |
| (c) | Rest | 85 - 97 |
| (e) | Rest | 60 - 80 |

Eine vorteilhafte Ausgestaltung der Erfindung ist, daß dem Gas oberhalb des Wirbelbettes ein sauerstoffhaltiges Gas und/oder Wasserdampf zugemischt wird. Dadurch wird die Rußbildung in den nachgeschalteten Apparaten unterdrückt.

Eine vorteilhafte Ausgestaltung der Erfindung ist, daß die Umsetzung gemäß Verfahrensstufe (a) in einer zirkulierenden Wirbelschicht durchgeführt wird. Der Vorteil einer zirkulierenden Wirbelschicht liegt im noch besseren Stoff- und Wärmeaustausch zwischen Reduktionsgas und Feststoff, da eine zirkulierende Wirbelschicht wesentlich stärker expandiert ist. Das führt zu einer besseren Gasausnutzung.

Eine vorteilhafte Ausgestaltung der Erfindung ist, daß die Umsetzung gemäß Verfahrensstufe (a) mit kohlenstoffhaltigen Reduktionsmitteln in überstöchiometrischem Verhältnis, bezogen auf SO₂, durchgeführt wird. Das kohlenstoffhaltige Reduktionsmittel braucht daher nicht exakt dosiert zu werden. Das verbrauchte kohlenstoffhaltige Reduktionsmittel wird ersetzt. Durch den Überschuß an kohlenstoffhaltigem Reduktionsmittel werden reduzierende Gase produziert, die in der katalytischen Reduktion gemäß Verfahrensstufe (e) zur weiteren Reduktion verwendet werden.

Eine vorteilhafte Ausgestaltung der Erfindung ist, daß die Umsetzung gemäß Verfahrensstufe (a) bei einer Temperatur von 850°C bis 900°C durchgeführt wird. In diesem Temperaturbereich werden besonders gute Ergebnisse für die Reduktion von SO₂ zum Schwefel erreicht.

Eine vorteilhafte Ausgestaltung der Erfindung ist, daß die katalytische Reduktion gemäß Verfahrensstufe (e) in zwei Reaktoren erfolgt, das aus dem ersten Reaktor austretende Gas mit SO₂ und Wasserdampf gemischt wird und in einen zweiten Reaktor bei einer Temperatur von 450°C bis 700°C eingeleitet wird und anschließend gemäß Verfahrensstufe (f) in eine Claus-Anlage geleitet wird. Die katalytische Reduktion gemäß der Verfahrensstufe (e) erfolgt in einem oder mehreren katalytischen Reaktoren. Der Reaktor gemäß Verfahrensstufe (e) erfordert keine Regenerierung.

Das Gas wird vor dem Eintritt in die katalytische Reduktion gemäß Verfahrensstufe (e) weitgehend von dem aus der Wirbelschicht mitgerissenen Staub befreit. Dies geschieht zunächst in einem Zyklonabscheider, dessen Ablauf zurück in die Wirbelschicht geführt werden kann. Die weitere Reinigung des Gases kann entweder in einem Multizyklon, bestehend aus mindestens zwei Zyklonen, oder in einem Heißgasfilter erfolgen.

Eine vorteilhafte Ausgestaltung der Erfindung ist, daß die Reaktoren für die katalytische Reduktion mit auf einer Al₂O₃-Trägermasse aufgebrachtem Molybdänsulfid oder mit Calciumaluminat als Katalysatoren betrieben werden. Diese Katalysatoren sind an sich aus der US-PS 3,755,551 bekannt.

Eine vorteilhafte Ausgestaltung der Erfindung ist, daß aus dem Gas nach der katalytischen Reduktion gemäß Verfahrensstufe (e) vor der Einleitung in eine Claus-Anlage Schwefel auskondensiert wird. Durch die Auskondensierung des erhaltenen Schwefels wird das Gleichgewicht in der Reduktionsreaktion verschoben, was für den Ablauf der Claus-Reaktion in der gemäß Verfahrensstufe (f) nachgeschalteten Claus-Anlage günstig ist.

Das genaue Verhältnis von H₂S zu SO₂ kann durch Zumischen von SO₂ zu dem aus der katalytischen Reduktion austretenden Gas eingestellt werden.

Die Erfindung wird anhand einer Figur und eines Beispiels erläutert.

### Figur

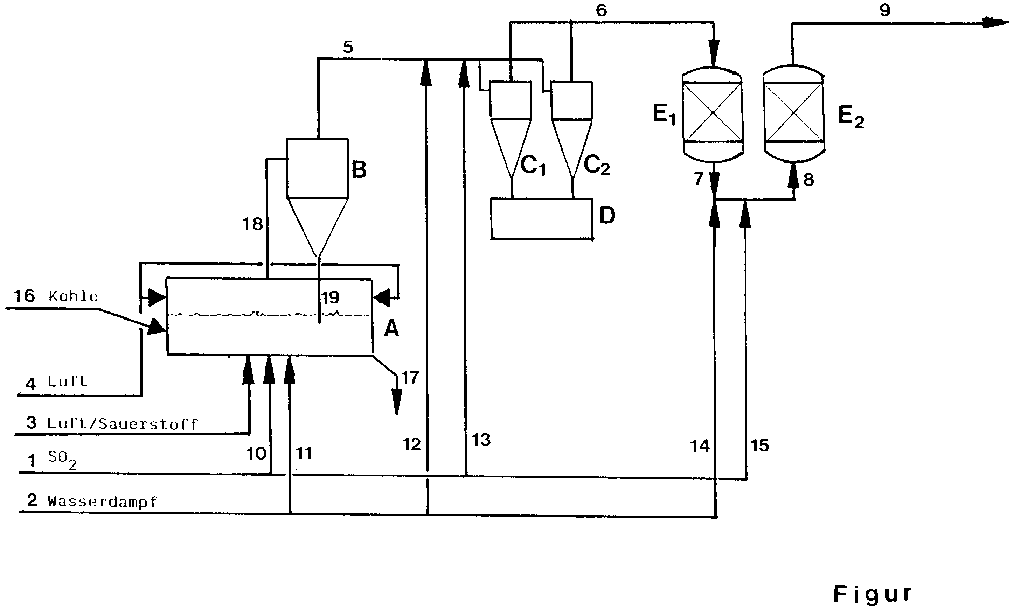

Die Figur zeigt die Verfahrensschritte (a) bis (e) des erfindungsgemäßen Verfahrens.

Es werden über die Leitungen (2) Wasserdampf, (1) SO₂, (3) Luft, mit Sauerstoff angereicherte Luft oder technischer Sauerstoff als Fluidisierungsgase in die Wirbelschicht (A) eingeleitet. Über die Leitung (4) wird Luft als Nachverbrennungsluft in den Wirbelschichtreaktor (A) oberhalb des Wirbelbettes eingeleitet. Über die Leitung (16) wird festes, kohlenstoffhaltiges Reduktionsmittel in die Wirbelschicht (A) eingeführt und über die Leitung (17) ausreagiertes Reduktionsmittel aus der Wirbelschicht (A) abgeführt. Über die Leitung (18) wird aus der Wirbelschicht (A) staubhaltiges Gas in den Zyklon (B) eingeleitet. Aus dem Zyklon (B) wird über die Leitung (19) Staub in die Wirbelschicht (A) zurückgeleitet. Aus dem Zyklon (B) wird das Gas über die Leitung (5) in die Zyklone (C₁) und (C₂) parallel eingeleitet. Aus den Zyklonen (C₁) und (C₂) wird Staub in den Bunker (D) abgeführt. Vor dem Eintritt des Gases in die Zyklone (C₁) und (C₂) wird das in der Leitung (5) geführte Gas mit Wasserdampf und SO₂, die über die Leitungen (12) und (13) zugeführt werden und in der Leitung (5) münden, gemischt. Aus den Zyklonen (C₁) und (C₂) wird das Gas über die Leitung (6) in den ersten katalytischen Reduktionsreaktor (E₁) eingeleitet. Aus dem katalytischen Reaktor (E₁) wird das Gas über die Leitung (7) abgeführt und mit Wasserdampf und SO₂, die Über die Leitungen (14) und (15) geführt werden und in die Leitung (7) münden, gemischt. Das Gasgemisch wird über die Leitung (8) in den zweiten katalytischen Reaktor (E₂) eingeleitet. Aus dem zweiten katalytischen Reaktor (E₂) wird das Gas über die Leitung (9) abgeführt und in eine an sich bekannte Claus-Anlage geleitet. Vor der Claus-Anlage kann ein in der Figur nicht dargestellter Schwefelkondensator angeordnet sein.

### Beispiel

Im Zusammenhang mit der vorstehend erläuterten Figur wird das erfindungsgemäße Verfahren in tabellarischer Form dargestellt. Das aus der Wirbelschicht (A) gemäß Verfahrensstufe (a) austretende und gemäß Verfahrensstufe (b) entstaubte Gas hat in der Leitung (5) eine Temperatur von 990°C. Nachdem das entstaubte Gas gemäß Verfahrensstufe (c) mit SO₂, das über Leitung (13), und Wasserdampf, der über Leitung (12) geführt wird, gemischt worden ist, hat das Gasgemisch in der Leitung (6) eine Temperatur von 495°C und wird nach der Feinentstaubung gemäß Verfahrensstufe (d) bei dieser Temperatur in den ersten katalytischen Reduktionsreaktor (E₁) gemäß Verfahrensstufe (e) eingeleitet. Aus dem ersten katalytischen Reduktionsreaktor (E₁) tritt das Gas über die Leitung (7) mit einer Temperatur von 910°C aus. Dieses Gas wird mit SO₂, das über die Leitung (15), und Wasserdampf, der über die Leitung (14) geführt wird, gemischt. Das Gasgemisch, das über die Leitung (8) in den zweiten katalytischen Reduktionsreaktor (E₂) gemäß Verfahrensstufe (e) geführt wird, weist eine Temperatur von 678°C auf. Das aus dem Reaktor (E₂) über die Leitung (9) abgeführte Gas weist eine Temperatur von 896°C auf. Die Gaszusammensetzung in den einzelnen Leitungen gehen aus der nachstehend aufgeführten Tabelle hervor.

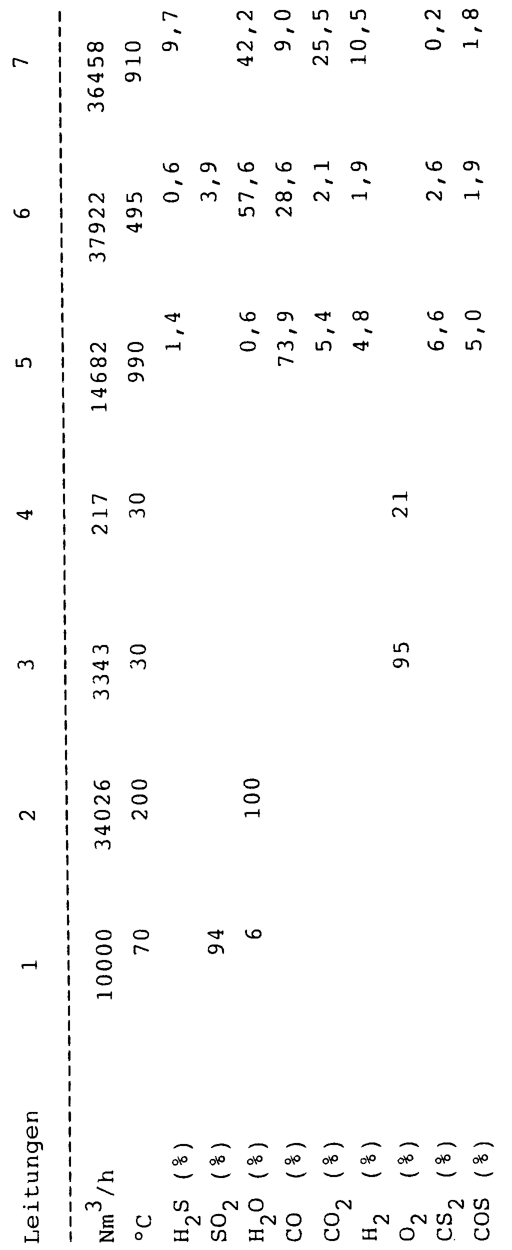

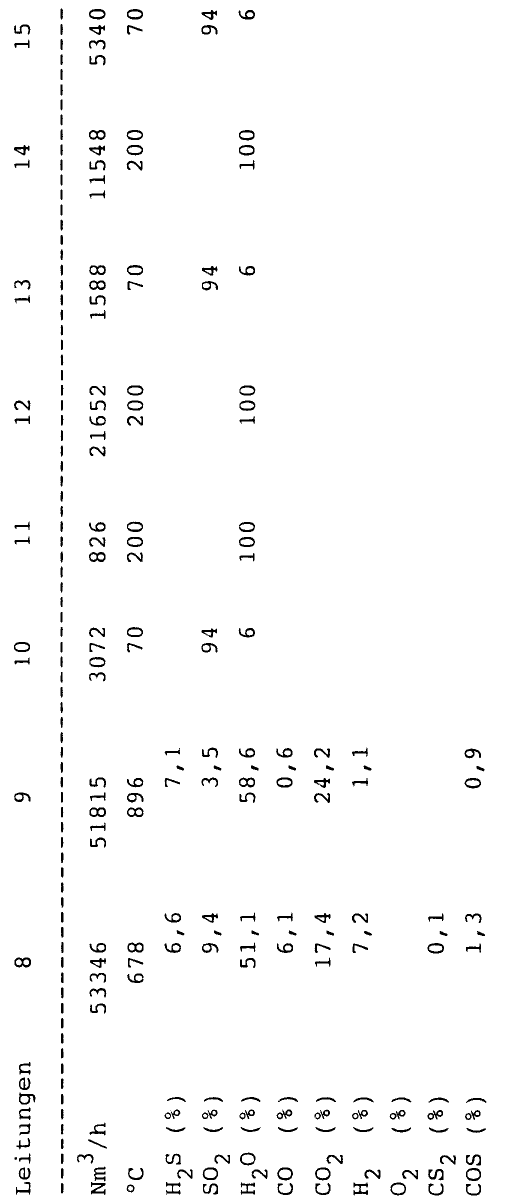

## Patentansprüche

1. Verfahren zur Reduktion von SO₂ zu Schwefel, dadurch gekennzeichnet, daß
a) SO₂, Sauerstoff und/oder Luft und Wasserdampf in eine Wirbelschicht eingeleitet werden, die Wirbelschicht mit einem festen, kohlenstoffhaltigen Reduktionsmittel beschickt ist und die Wirbelschicht bei einer Temperatur von 700°C bis 950°C betrieben wird,
b) das aus der Wirbelschicht austretende Gas entstaubt wird,
c) das gemäß Verfahrensstufe (b) entstaubte Gas mit SO₂ und Wasserdampf gemischt wird,
d) das Gasgemisch gemäß Verfahrensstufe (c) entstaubt wird,
e) das gemäß Verfahrensstufe (d) entstaubte Gas in mindestens einen Reaktor zur katalytischen Reduktion bei einer Temperatur von 450°C bis 700°C eingeleitet wird,
f) bei dem aus der katalytischen Reduktion gemäß Verfahrensstufe (e) austretenden Gas ein Verhältnis von H₂S zu SO₂ von etwa 1,8 bis 2,2 zu 1 eingestellt wird und dieses Gas in eine Claus-Anlage eingeleitet wird.

2. Verfahren nach Anspruch 1, dadurch gekennzeichnet, daß dem Gas oberhalb des Wirbelbettes ein sauerstoffhaltiges Gas und/oder Wasserdampf zugemischt wird.

3. Verfahren nach Anspruch 1, dadurch gekennzeichnet, daß die Umsetzung gemäß Verfahrensstufe (a) in einer zirkulierenden Wirbelschicht durchgeführt wird.

4. Verfahren nach den Ansprüchen 1 bis 3, dadurch gekennzeichnet, daß die Umsetzung gemäß Verfahrensstufe (a) mit kohlenstoffhaltigen Reduktionsmitteln in überstöchiometrischem Verhältnis, bezogen auf SO₂, durchgeführt wird.

5. Verfahren nach den Ansprüchen 1 bis 4, dadurch gekennzeichnet, daß die Umsetzung gemäß Verfahrensstufe (a) bei einer Temperatur von 850°C bis 900°C durchgeführt wird.

6. Verfahren nach den Ansprüchen 1 bis 5, dadurch gekennzeichnet, daß die katalytische Reduktion gemäß Verfahrensstufe (e) in zwei Reaktoren erfolgt, das aus dem ersten Reaktor austretende Gas mit SO₂ und Wasserdampf gemischt wird und in einen zweiten Reaktor bei einer Temperatur von 450°C bis 700°C eingeleitet wird und anschließend gemäß Verfahrensstufe (f) in eine Claus-Anlage geleitet wird.

7. Verfahren nach den Ansprüchen 1 bis 6, dadurch gekennzeichnet, daß die Reaktoren für die katalytische Reduktion mit auf einer Al₂O₃-Trägermasse aufgebrachtem Molybdänsulfid oder mit Calciumaluminat als Katalysatoren betrieben werden.

8. Verfahren nach den Ansprüchen 1 bis 7, dadurch gekennzeichnet, daß aus dem Gas nach der katalytischen Reduktion gemäß Verfahrensstufe (e) vor der Einleitung in eine Claus-Anlage Schwefel auskondensiert wird.
